# EUROPÄISCHE PATENTSCHRIFT

(11) **EP 1 659 328 B1**
(45) Veröffentlichungstag und Bekanntmachung des Hinweises auf die Patenterteilung: **06.04.2011**
(21) Anmeldenummer: 05109463.9
(22) Anmeldetag: 12.10.2005
(51) Int. Cl.: F01M 13/00, F02M 35/104, F02M 35/16

(54) **Gasentlüftungsleitung mit Drosselbohrung**
Gas venting line with a throttle opening
Conduit d'évent de gaz avec un papillon

(30) Priorität: 23.11.2004 DE 102004056442
(43) Veröffentlichungstag der Anmeldung: 24.05.2006
(73) Patentinhaber: MANN+HUMMEL GmbH, 71638 Ludwigsburg (DE)
(72) Erfinder: Jessberger, Thomas, 71679 Asperg (DE)

(56) Entgegenhaltungen:
- EP-A- 0 351 521
- DE-A1- 4 122 774
- DE-A1- 10 154 588
- DE-A1- 19 726 559
- DE-B1- 1 476 119
- DE-U1- 29 511 197
- US-A- 3 111 120
- US-A- 3 364 910

## Beschreibung

Die Erfindung betrifft eine Gasüberleitungsanordnung für ein Gehäuse an einer Brennkraftmaschine oder einen Kraftstoffbehälter, mit einer Drosselbohrung.

Eine Drosselbohrung dient insbesondere der einfachen und kostengünstigen Entlüftung von Tank oder Kurbelgehäuse oder der Zuführung von Fremdgasen in einem Verbrennungsmotor. Bei einer bekannten Gasüberleitungsanordnung in einem Gehäuse aus Kunststoff wird die Drosselbohrung bei der Herstellung durch Spritzgießen eingebracht. Dabei wird ein in einer Hälfte des Spritzgießwerkzeugs angeordneter dornförmiger Schieber umspritzt, der der zu formenden Gehäuseausnehmung innerhalb der Gasüberleitungsanordnung entspricht. Es ergibt sich ein Anschlussstutzen, der auf seiner Spitze einen nadelartigen Dornfortsatz aufweist. Dieser Dornfortsatz besitzt einen Durchmesser von nur etwa 1 mm, der dem gewünschten Bohrungsdurchmesser für die Drosselbohrung entspricht. Wegen seines geringen Querschnitts kann der Dornfortsatz nicht direkt gekühlt werden, wodurch die Zykluszeit im Fertigungsprozess erhöht ist. Bedingt durch das Abkühlverhalten der Kunststoffschmelze kann die Geometrie der Drosselbohrung oftmals nur schwer in den geforderten engen Toleranzen eingehalten werden.

Im Automobilbau werden Bauteile, die eine Gasüberleitungsanordnung mit Drosselbohrung aufweisen, meist aus glasfaserverstärkten Kunststoffen hergestellt. Durch die Glasfasern verschleißt das Spritzgießwerkzeug sehr stark; Werkzeuge oder Werkzeugteile für maßgenaue Teile wie hier dem Dornfortsatz auf dem Schieber müssen deshalb häufig nachgearbeitet werden.

Ein weiterer Nachteil besteht darin, dass der dünne Dornfortsatz in der gegenüber liegenden Werkzeughälfte des Spritzgießwerkzeugs in entsprechenden Aufnahmebohrungen geführt sein muss. Er kann dort aber wegen seiner geringen Abmessungen schlecht abgedichtet werden, so dass die Gefahr besteht, dass es zu Überspritzungen und Gratbildungen kommt. Diese Fehlstellen engen nicht nur den Drosselquerschnitt von vornherein ein, sondern können in Folge von Ablagerungen während des Betriebs des Kraftfahrzeugs zu einem vollständigen Verschluss der Drosselbohrung führen.

Eine Gasüberleitungsanordnung mit einem Gehäuse und einer Drosselbohrung, die in ein Blendenelement eingebracht ist, wurde in DE 1 476 119 B beschrieben. Das Blendenelement ist eine Metallscheibe, die in eine Nut eingelegt und mittels Federring fixiert ist.

Es stellt sich die Aufgabe, in einer Gasüberleitungsanordnung für ein Gehäuse an einer Brennkraftmaschine oder einen Kraftstoffbehälter, eine Drosselbohrung mit einfach herzustellender und dabei gut reproduzierbarer Geometrie in engen Toleranzen, zu schaffen.

Diese Aufgabe wird erfindungsgemäß bei einer Gasüberleitungsanordnung der eingangs genannten Art dadurch gelöst, dass das Blendenelement einen angestellten Bördelrand aufweist, dessen aüßerer Stanzgrat in eine Gehäuseausnehmung, oder in deren Nut einpressbar ist.

Die Bezeichnung Gasüberleitungsanordnung im Sinne der Erfindung bezeichnet alle Anordnungen, die Gasströmungen in welcher Richtung auch immer zulassen, also nicht nur Entlüftungsanordnungen, die Gase aus dem Inneren des Verbrennungsmotors entweichen zu lassen, sondern auch Einleitstellen, die Fremdgase von außen einströmen zu lassen, je nach Aufbau und Betriebszustand des Motors.

Durch die getrennte Herstellung von Gehäuse und Drosselbohrung kann die Fertigung der Drosselbohrung optimiert werden und zwar unabhängig von der des Anschlussstutzens am Kurbelgehäuse oder Saugrohr bzw. von der des sonstigen Motorenteils, das die Gasüberleitungsanordnung mit der Gehäuseausnehmung und dem darin eingesetzten Blendenelement enthält.

Die Drosselbohrung selber kann in jeder bekannten Weise je nach Wahl des Werkstoffs für das Blendenelement vorgenommen werden, beispielsweise durch Lasern. Die Geometrie der Drosselbohrung ist somit auch unabhängig von dem eigentlichen Blendenelement mit großer Genauigkeit herstellbar.

Durch eine endseitig im Hohlkanal des Anschlussstutzens bzw. der in sonstiger Weise ausgebildeten Gehäuseausnehmung herausragende Anlageschulter kann ein definierter Anschlag für ein einzupressendes Blendenelement geschaffen sein; eine prozesssichere Montage ist somit möglich, unter Umständen auch von Hand.

Wenn der Hohlkanal bzw. die Gehäuseausnehmung einen Hinterschnitt in Form einer umlaufenden Nut aufweist und das Blendenelement als Scheibe ausgebildet ist, die in die Nut einschnappbar ist, so ist es möglich, nachträglich eine Wartung oder eine Änderung der Drosselbohrungsgeometrie durch einen Austausch des Blendenelements vorzunehmen. Hierzu ist entweder das Blendenelement selbst oder der Hohlkanal des Anschlussstutzens bzw. die die Gehäuseausnehmung umschließende Gehäusewandung wenigstens im Bereich der Nut elastisch ausgebildet.

Das Blendenelement ist aus einer Metallscheibe gebildet, die erfindungsgemäß einen angestellten Bördelrand aufweist, dessen äußerer Stanzgrat in den Hohlkanal oder in die Nut einpressbar ist.

Besonders vorteilhaft ist es, wenn das Blendenelement elektrisch beheizbar ist. Durch eine bei tiefen Temperaturen zuschaltbare elektrische Beheizung einer Drosselbohrung, welche der Kurbelgehäuseentlüftung dient, werden Störungen oder sogar Beschädigungen eines Verbrennungsmotors durch Vereisungen der Drosselbohrungen vermieden. Diese können insbesondere auftreten, wenn sich bei Minustemperaturen speziell durch extremen Kurzstreckenbetrieb im Öl mehr Wasser als üblich bildet und das wasserhaltige Gasgemisch auf die kalte Ansaugluft trifft. Durch die Vereisung bildet sich ein Überdruck im Kurbelgehäuse und Öl entweicht durch die Messstab-Öffnung oder die Motordichtungen.

Neben einer Ausbildung eines Anschlussstutzens am Kurbelgehäuse mit Gehäuseausnehmung und einsetzbarem Blendenelement ist es vorteilhaft, erfindungsgemäße Gasüberleitungsanordnungen jeweils bei Saugrohren von Verbrennungsmotoren vorzusehen, um eine zylinderselektive Entlüftung bewirken zu können. Hier zeigen sich die besonderen Vorteile der Erfindung dadurch, dass jeweils ein spezielles Blendenelement eingesetzt werden kann, das an die Druck und Strömungsverhältnisse im jeweiligen Saugrohr angepasst ist.

Die Erfindung wird nachfolgend anhand von Ausführungsbeispielen mit Bezug auf die Zeichnung näher erläutert. Die Figuren zeigen im Einzelnen:
- Fig. 1, 2 und 5: verschiedene Ausführungsformen von Anschlussstutzen mit Blendenelementen, jeweils in einem axialen Schnitt;
- Fig. 3 und 4: nicht zur Erfindung gehörenden Anschlussstutzen
- Fig. 6: eine Entlüftungsanordnung in einem Anschluss für ein Kurbelgehäuseentlüftungs-Verteilerelement in Schnittansicht;
- Fig. 7: eine zylinderselektive Gaseinleitung über die Zylinderkopfhaube in Draufsicht; und
- Fig. 8: eine direkt in ein Saugrohr eingebrachte Gasüberleitungsanordnung im Schnitt.

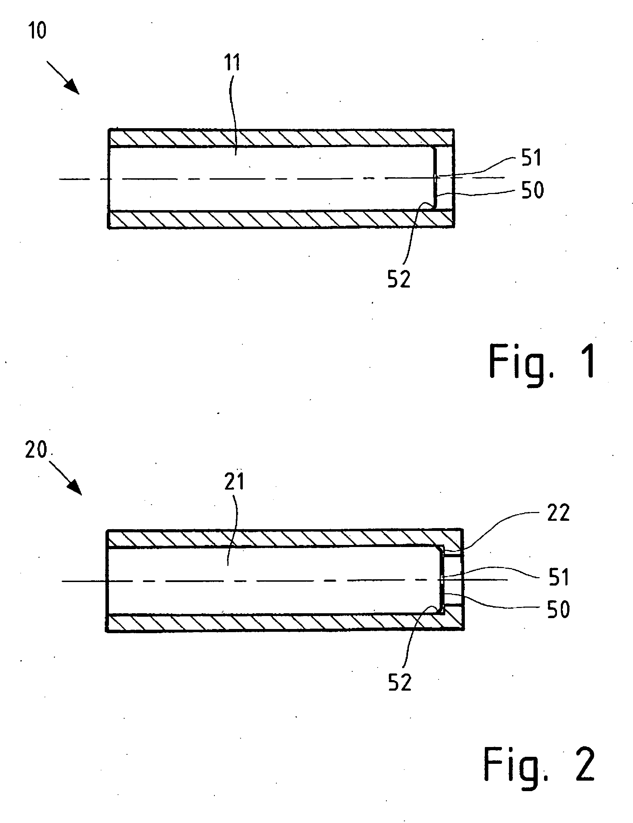

Fig. 1 zeigte eine erste Ausführungsform einer Gasüberleitungsanordnung in Form eines Anschlussstutzens 10, dessen innerer Hohlkanal 11 durch ein Blendenelement 50, das eine zentrale Drosselbohrung 51 aufweist, abgeschlossen ist. Das Blendenelement ist als Metallscheibe mit einem Bördelrand 52 ausgebildet. Der Bördelrand 52 ist beispielsweise beim Stanzen des Blendenelements aus einem Blech einfach zu erhalten. Der äußere Stanzgrat besitzt einen gegenüber dem Innendurchmesser des Endbereichs des Hohlkanals 11 größeren Außendurchmesser, so dass sich der Stanzgrat in die Wandung des Hohlkanals einfrisst, wodurch das Blendenelement 50 im Hohlkanal festgelegt ist.

In Fig. 2 ist ein Anschlussstutzen 20 dargestellt, der gegenüber der ersten Ausführungsform dahingehend verbessert ist, dass durch eine Anlageschulter 22 ein definierter Endanschlag für das Blendenelement 50 geschaffen ist. Das Blendenelement 50 kann so mit nahezu beliebigen Montagehilfsmitteln durch den Hohlkanal 21 geführt und eingepresst werden, bis es bündig an der Anlageschulter 22 anliegt. Der Außendurchmesser des Bördelrands 52 ist wiederum so gewählt, dass sich der äußere Stanzgrat in die Wandung des Hohlkanals 21 eingraben kann.

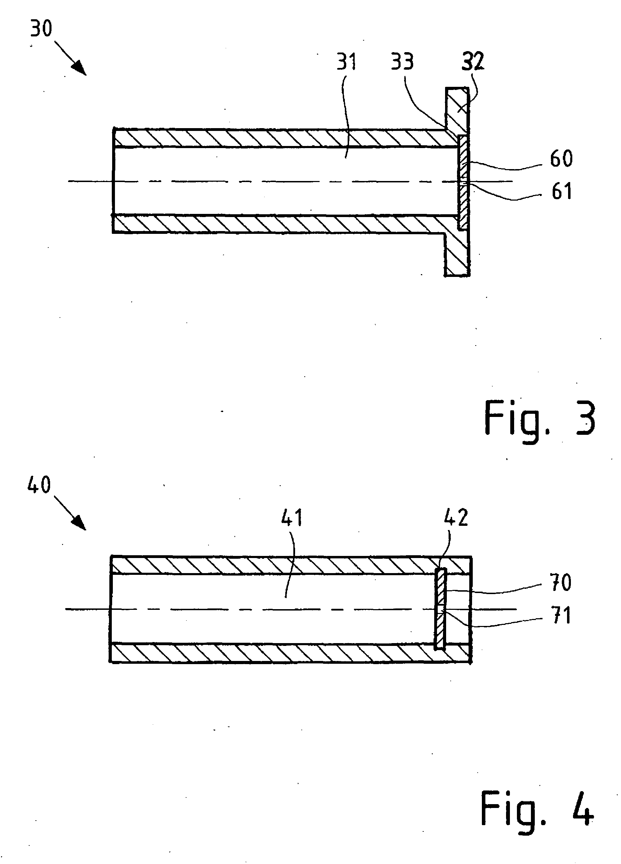

Fig. 3 und 4 zeigen Beispiele der Anordnungen, die nicht zum Gegenstand der Erfindung gehören.

Fig. 3 zeigt einen Anschlussstutzen 30, der in seinem Endbereich mit einem Flansch 32 versehen ist. Ein Blendenelement 60 aus Kunststoff kann entweder direkt auf den Flanschbereich 32 aufgeschweißt werden oder aber, wie in Fig. 3 dargestellt, in eine Vertiefung 33 eingelegt und dann durch Schweißen, Kleben oder dergleichen dort befestigt werden.

In Fig. 4 ist ein Anschlussstutzen 40 gezeigt, in dessen innerem Hohlkanal 41 wenigstens eine Nut 42 eingebracht ist. In diese Nut 42 kann ein Blendenelement 70 mit Drosselbohrung 71 eingeschnappt werden. Dazu ist das Blendenelement soweit verformbar ausgebildet, dass es in dem engen Durchmesserbereich des Hohlkanals 41 vor der Nut 42 soweit gestaucht werden kann, dass es erst beim Erreichen der Nut 42 wieder expandiert. Alternativ könnte die Gehäuseform und/oder den Werkstoff des Anschlussstutzens 40 so verändert werden, dass dieser beim Einschieben eines starren Blendenelements elastisch geweitet werden kann.

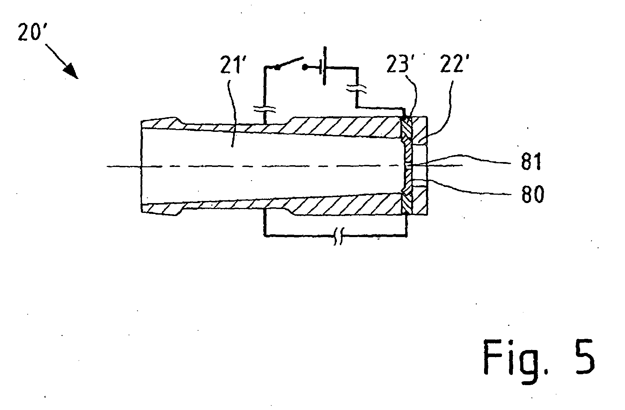

Fig. 5 zeigt einen Anschlussstutzen 20', der ähnlich zu dem Anschlussstutzen 20 in Fig. 2 ausgebildet ist und der ebenfalls eine Anschlagschulter 22' aufweist. Zusätzlich sind kurz vor der Anschlagschulter 22' am Umfang des Anschlussstutzens 20' wenigstens zwei Elektrodenelemente 23' angeordnet. Sie können beispielsweise bei der Herstellung des Anschlussstutzens 20' eingespritzt werden und bestehen vorzugsweise aus Kupfer. Ein Blendenelement 80 ist elektrisch beheizbar ausgebildet, beispielsweise durch Integration eines an sich bekannten PTC-Heizelements. Es weist randseitige Kontaktflächen auf, die sich beim lagerichtigen Einpressen des Blendenelements 80 in die Elektrodenelemente 23' einfressen, so dass ein elektrischer Kontakt hergestellt ist. Der Stromanschluss des Blendenelements 80 kann aber auch in anderer Weise hergestellt sein.

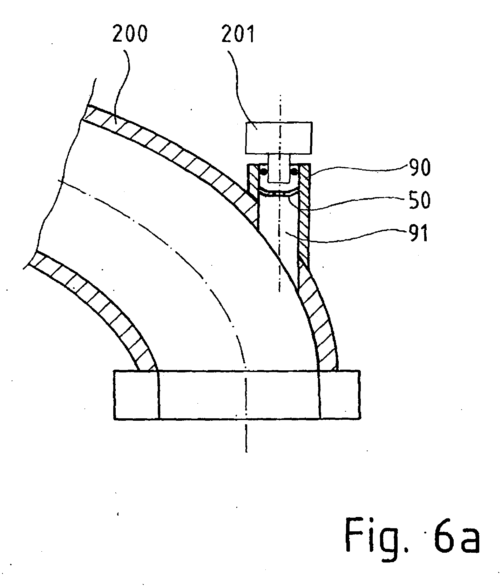

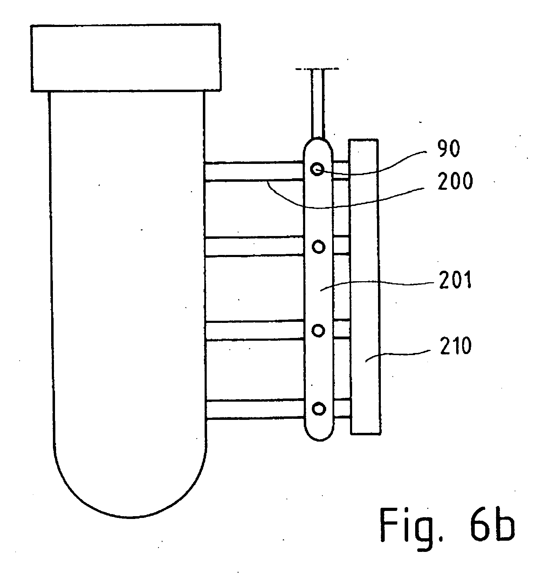

Fig. 6 zeigt ein Saugrohr 200 für einen Verbrennungsmotor. Es ist mit einem Anschlussstutzen 90 mit einem inneren Hohlkanal 91 versehen. Ein Blendenelement 50 aus Metall ist darin eingepresst. Der Hohlkanal mündet im Inneren des Saugrohrs 200. Er erstreckt sich noch über eine solche Länge jenseits des Blendenelements 50 nach außen, dass ein Kurbelgehäuseentlüftungs-Verteilerelement 201 aufsteckbar ist. Die einzelnen Anschlussstutzen 90 parallel angeordneter Saugrohre 200 sind über ein gemeinsames Kurbelgehäuseentlüftungs-Verteilerelement 201 verbunden, wie in Fig. 6b dargestellt.

Da das Saugrohr 200 jedes Zylinders eine eigene Gasüberleitungsanordnung aufweist, ist eine zylinderselektive Be- und Entlüftung möglich. Insbesondere kann das Blendenelement 50 für den jeweiligen Zylinder individuell ausgewählt und hinsichtlich seines Drosselbohrungsquerschnitts an die Strömungs- und Druckverhältnisse dort angepasst werden.

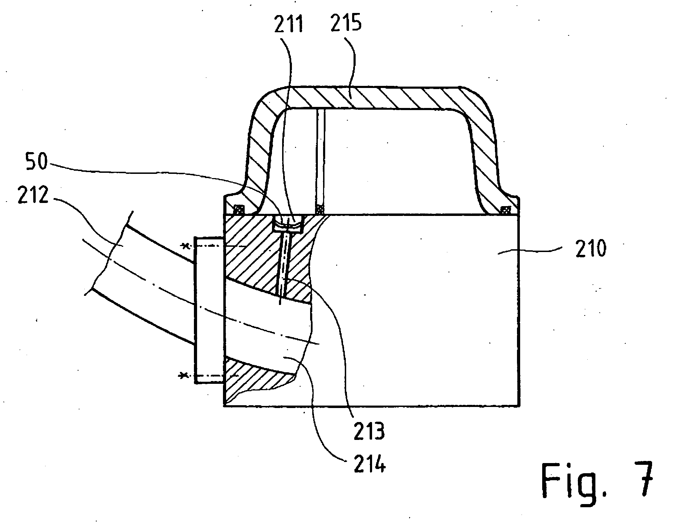

Bei dem in Fig. 7 schematisch dargestellten Ausschnitt eines Verbrennungsmotors ist die erfindungsgemäße Gasüberleitungsanordnung in einen Zylinderkopf 210 eingebracht und zwar als zylinderselektive Einleitungsstelle an der Oberfläche, die mit einer Zylinderkopfhaube 211 abgedeckt ist. In eine Gehäuseausnehmung 211 ist ein Blendenelement 50 eingesetzt. Die Gehäuseausnehmung 211 setzt sich in einer Bohrung 213 fort, die in einen Saugkanal 214 mündet, welcher sich in einem Saugrohr 212 fortsetzt.

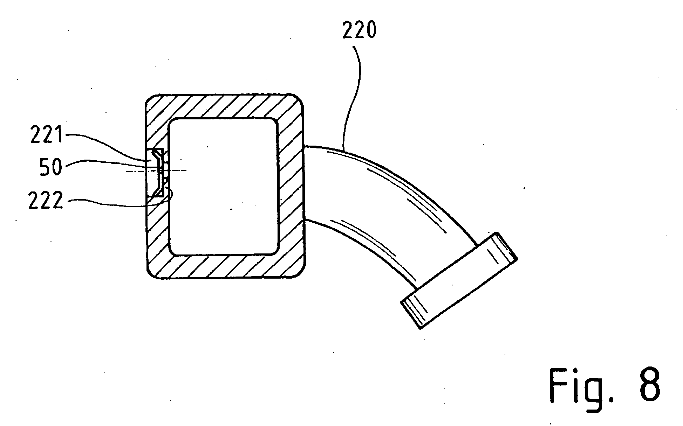

Ein weiterer Anwendungsfall einer erfindungsgemäßen Gasüberleitungsanordnung ist in Fig. 8 dargestellt, wo eine Gehäuseausnehmung 221 mit Anschlagschulter 222 direkt in den Flanschbereich eines Saugrohrs 220 eingebracht ist. Ein Blendenelement 50 mit Drosselbohrung wird von außen in die Gehäuseausnehmung 221 eingedrückt und verkrallt sich dort durch seinen Bördelrand.

## Patentansprüche

1. Gasüberleitungsanordnung für eine Brennkraftmaschine oder einen Kraftstoffbehälter, aufweisend ein Gehäuse und eine Drosselbohrung (51; 61; 81);
wobei die Drosselbohrung (51; 61; 81) in ein Blendenelement (50; 60; 80) eingebracht ist, das in eine Gehäuseausnehmung (11; 21; 21; 91) einsetzbar ist,
wobei das Blendenelement (50; 60; 80) aus einer Metallscheibe gebildet ist,
**dadurch gekennzeichnet, dass** das Blendenelement (50; 60; 80) einen angestellten Bördelrand (52) aufweist, dessen äußerer Stanzgrat in die Gehäuseausnehmung (11; 21; 21'; 91) oder in deren Nut einpressbar ist.

2. Gasüberleitungsanordnung nach Anspruch 1, **dadurch gekennzeichnet, dass** die Gehäuseausnehmung als innerer Hohlkanal eines Anschlussstutzens (10; 20; 20'; 90) ausgebildet ist.

3. Gasüberleitungsanordnung nach Anspruch 1 oder 2, **dadurch gekennzeichnet, dass** die Gehäuseausnehmung (21; 21'; 221) axial durch eine Anlageschulter (22; 22'; 222) begrenzt ist.

4. Gasüberleitungsanordnung nach einem der Ansprüche 1 bis 3, **dadurch gekennzeichnet, dass** die Gehäuseausnehmung (11,21,21';91) eine umlaufende Nut aufweist und dass das Blendenelement (50,60,80) in die Nut einschnappbar ist.

5. Gasüberleitungsanordnung nach Anspruch 4, **dadurch gekennzeichnet, dass** das Blendenelement (50,60,80) elastisch ausgebildet ist.

6. Gasüberleitungsanordnung nach Anspruch 2 und 4, **dadurch gekennzeichnet, dass** der Anschlussstutzen (10,20,20',80) wenigstens im Bereich der Nut elastisch ausgebildet ist.

7. Gasüberleitungsanordnung nach einem der Ansprüche 1 bis 6, **dadurch gekennzeichnet, dass** das Blendenelement (80) elektrisch beheizbar ist.

8. Gasüberleitungsanordnung nach Anspruch 7, **dadurch gekennzeichnet, dass** wenigstens zwei Elektrodenelemente (23') in eine die Gehäuseausnehmung (21') begrenzende Gehäusewandung eingebracht sind, welche das elektrisch beheizbare Blendenelement (80) randseitig kontaktieren.

9. Saugrohr (200; 220) für einen Verbrennungsmotor mit einer Gasüberleitungsanordnung nach einem der Ansprüche 1 bis 8.

10. Saugrohr (200) nach Anspruch 9, **dadurch gekennzeichnet, dass** an einer Außenseite der Gehäuseausnehmung (91) ein Kurbelgehäuseentlüftungs-Verteilerelement (201) anschließbar ist.

11. Zylinderkopf (210) für einen Verbrennungsmotor mit einer Gasüberleitungsanordnung nach einem der Ansprüche 1 bis 8, wobei die Gehäuseausnehmung (211) in den Zylinderkopf (210) an der zu einer Zylinderkopfhaube (215) hin gewandten Außenseite eingebracht ist und die Gehäuseausnehmung (211) mit einem Saugkanal (213) in Verbindung steht.

12. Kurbelgehäuseelement für einen Verbrennungsmotor mit einer Gasüberleitungsanordnung nach einem der Ansprüche 1 bis 8.

## Claims

1. Gas transfer line assembly for an internal combustion engine or a fuel tank, featuring a housing and a throttle bore (51; 61; 81), the throttle bore (51 ;61 ;81) being realized in a faceplate element (50; 60; 80) that can be inserted into a housing recess (11; 21; 21'; 91), the faceplate element (50; 60; 80) being made of a metal disc, **characterized in that** the faceplate element (50; 60; 80) features a flanged edge (52) in contact, the exterior punching burr of which can be pressed into the housing recess (11; 21; 21'; 91) or into its groove.

2. Gas transfer line assembly according to claim 1, **characterized in that** the housing recess is designed as internal hollow channel of a connecting branch (10; 20; 20'; 90).

3. Gas transfer line assembly according to claim 1 or 2, **characterized in that** the housing recess (21; 21'; 221) is axially defined by a bearing shoulder (22; 22'; 222).

4. Gas transfer line assembly according to one of the claims 1 to 3, **characterized in that** the housing recess (11; 21; 21'; 91) features a circumferential groove and that the faceplate element (50; 60; 80) can snap into the groove.

5. Gas transfer line assembly according to claim 4, **characterized in that** the faceplate element (50; 60; 80) is designed elastically.

6. Gas transfer line assembly according to claim 2 and 4, **characterized in that** the connecting branch (10; 20; 20'; 90) is designed elastically at least in the area of the groove.

7. Gas transfer line assembly according to one of the claims 1 to 6, **characterized in that** the faceplate element (80) can be heated electrically.

8. Gas transfer line assembly according to claim 7, **characterized in that** at least two electrode elements (23'), which contact the electrically heatable faceplate element (80) at the edge side, are incorporated in a housing wall defining the housing recess (21').

9. Intake pipe (200; 220) for an internal combustion engine with a gas transfer line assembly according to one of the claims 1 to 8.

10. Intake pipe (200) according to claim 9, **characterized in that** a crankcase ventilation distributor element (201) can be connected at an exterior side of the housing recess (91).

11. Cylinder head (210) for an internal combustion engine with a gas transfer line assembly according to one of the claims 1 to 8, the housing recess (211) being realized in the cylinder head (210) at the exterior side facing a cylinder head cover (215) and the housing recess (211) being connected with an intake port (213).

12. Crankcase element for an internal combustion engine with a gas transfer line assembly according to one of the claims 1 to 8.

## Revendications

1. Elément de transfert de gaz pour un moteur à combustion interne ou un réservoir de carburant, présentant un boîtier et un orifice d'étranglement (51; 61; 81), l'orifice d'étranglement (51; 61; 81) étant réalisé dans un panneau (50; 60; 80) qui peut être introduit dans un creux du boîtier (11; 21; 21'; 91), le panneau (50; 60; 80) étant formé d'un disque en métal, **caractérisé en ce que** le panneau (50; 60; 80) est doté d'un rebord (52) en contact dont l'arête de découpage extérieure peut être pressée dans le creux du boîtier (11; 21; 21'; 91) ou dans sa rainure.

2. Elément de transfert de gaz selon la revendication 1, **caractérisé en ce que** le creux du boîtier est réalisé en tant que canal creux intérieur d'une tubulure de raccord (10; 20; 20'; 90).

3. Elément de transfert de gaz selon la revendication 1 ou 2, **caractérisé en ce que** le creux du boîtier (21; 21 221) est limité en sens axial par un épaulement de contact (22; 22'; 222).

4. Elément de transfert de gaz selon l'une des revendications 1 à 3, **caractérisé en ce que** le creux du boîtier (11; 21; 21'; 91) présente une rainure circulaire et que le panneau (50; 60; 80) peut être encliqueté dans la rainure.

5. Elément de transfert de gaz selon la revendication 4, **caractérisé en ce que** le panneau (50; 60; 80) est élastique.

6. Elément de transfert de gaz selon les revendications 2 et 4, **caractérisé en ce que** la tubulure de raccord (10; 20; 20'; 90) est tout au moins élastique dans la zone de la rainure.

7. Elément de transfert de gaz selon l'une des revendications 1 à 6, **caractérisé en ce que** le panneau (80) peut être chauffé par voie électrique.

8. Elément de transfert de gaz selon la revendication 7, **caractérisé en ce qu'**au moins deux éléments d'électrode (23') sont logés dans une paroi du boîtier limitant le creux de boîtier (21') et que ces éléments établissent le contact, sur le bord, avec le panneau (80) pouvant être chauffé par voie électrique.

9. Tube d'aspiration (200; 220) pour un moteur à combustion interne avec un élément de transfert de gaz selon l'une des revendications 1 à 8.

10. Tube d'aspiration (200) selon la revendication 9, **caractérisé en ce qu'**un élément de distribution d'un système de purge du carter de vilebrequin (201) peut être raccordé à une face extérieure du creux de boîtier (91).

11. Culasse de cylindre (210) pour un moteur à combustion interne avec un élément de transfert de gaz selon l'une des revendications 1 à 8, le creux du boîtier (211) étant inséré dans la culasse de cylindre (210) du côté extérieur orienté vers un couvercle de culasse de cylindre (215) et que le creux du boîtier (211) est relié à un conduit d'aspiration (213).

12. Elément de carter de moteur pour un moteur à combustion interne avec un élément de transfert de gaz selon l'une des revendications 1 à 8.
